# EUROPÄISCHE PATENTSCHRIFT

(11) **EP 0 783 466 B1**
(45) Veröffentlichungstag und Bekanntmachung des Hinweises auf die Patenterteilung: **07.01.1999**
(21) Anmeldenummer: 95929741.7
(22) Anmeldetag: 02.09.1995
(51) Int. Cl.: C04B 35/26, H01F 41/02

(54) **VERFAHREN ZUR HERSTELLUNG VON FORMKÖRPERN AUS HARTFERRITEN**
METHOD OF PRODUCING SHAPED BODIES FROM HARD FERRITE
PROCEDE DE FABRICATION DE CORPS FORMES EN FERRITES DURES

(30) Priorität: 27.09.1994 DE 4434471
(43) Veröffentlichungstag der Anmeldung: 16.07.1997
(73) Patentinhaber: ROBERT BOSCH GMBH, 70442 Stuttgart (DE)
(72) Erfinder: DRAXLER, Waldemar, D-71706 Markgröningen (DE); AICHELE, Wilfried, D-71364 Winnenden (DE); LAUKANT, Uwe, D-73614 Schorndorf (DE); BÖDER, Horst, D-71069 Sindelfingen (DE)
(86) Internationale Anmeldenummer: DE9501189
(87) Internationale Veröffentlichungsnummer: WO9609998

(56) Entgegenhaltungen:
- EP-A- 0 350 070
- DE-A- 1 471 430
- DE-A- 1 646 530
- DATABASE WPI Section Ch, Week 7537 Derwent Publications Ltd., London, GB; Class L03, AN 75-61016W & JP,A,49 128 297 ( KAWASAKI STEEL KK) , 9.Dezember 1974

## Beschreibung

### Stand der Technik

Es ist bekannt, Formkörper aus feinteiligen Pulverwerkstoffen herzustellen, wobei diese mit Plastifizier- und Bindemitteln gemischt und zu "Grünkörpern" verformt werden, aus denen das Plastifizier- und Bindemittel durch Erhitzen entfernt wird, bevor die Pulverteilchen beim Erhitzen auf Sintertemperaturen zusammensintern, wodurch der gewünschte Formkörper entsteht. Auch Ferrit-Dauermagnete werden durch Sinterverfahren hergestellt. Nach der Veröffentlichung von G. Heimke und J.D. Nye, Powder Metallurgy International, Vol. 5, No. 1, 1973, Seiten 28 ff. werden die Pulver trocken oder naß (d.h. als wäßrige Suspension) verpreßt, wobei durch Naßverpressen im Magnetfeld die besten magnetischen Eigenschaften erzielt werden. Weiterhin können nach der genannten Veröffentlichung die Ferrit-Teilchen in Kunststoffe eingearbeitet werden. Die Magnete aus diesen kunststoffgebundenen Ferrit-Teilchen werden üblicherweise durch Extrusion oder Spritzgießen hergestellt. Über die Art der Kunststoffe wird nichts ausgesagt. Dieser Magnettyp wird nicht gesintert, sondern nur ausgehärtet.

In DE-A1-36 26 360 wird ein Spritzgußverfahren zur Herstellung von anisotropen Dauermagneten beschrieben. Dabei wird ein "dauermagnetisches Pulver" mit Kunststoffen gemischt und die Mischung granuliert. Das Granulat wird im Magnetfeld in die gewünschte Form gespritzt, die Formkörper werden gesintert und gegebenenfalls nachbearbeitet. Abschließend werden die gesinterten Formkörper aufmagnetisiert. Als Kunststoffe, die offenbar die Funktion eines Plastifizier- und Bindemittels ausüben, werden "Polyamide, Polyurethane, Polypropylen, Polyethylen, Polystyrol etc." genannt, ohne nachvollvollziehbare Angaben über die damit erreichbaren Kennwerte.

In der DE-C1-40 33 952 wird ein binäres Bindersystem nach Art der Solid-Polymer-Solutions für die Verarbeitung von Metallpulver durch Spritzgießen vorgeschlagen. Die Herstellung von Magneten nach diesem Verfahren wird nicht erwähnt. Das binäre Bindersystem besteht aus Polyethylen und/oder Polypropylen als polymerer Binderkomponente sowie Cyclododecan, Cyclododecanon, Cyclododecanol und/oder Stearylalkohol als niedermolekularer Binderkomponente.

In EP-A-0 115 104 wird ein Verfahren zur Herstellung von gesinterten anorganischen Formkörpern beschrieben, das ebenfalls nicht auf die Herstellung von Magneten gerichtet ist. Als Ausgangsstoffe werden neben metallischen und oxidischen Stoffen Carbide, Nitride, Boride und Sulfide genannt. Die Formkörper werden durch Spritzgießen oder Strangpressen hergestellt. Ein wesentliches Merkmal des Verfahrens ist die Verwendung eines Gemisches aus einem oxidierten Wachs und Stearinsäure als Plastifizier- und Bindemittel.

Aus DE 4033952, EP-A- 035 070, DE-A- 147 1430 und JP-A-491282 17 ist der Einsatz von Cyclododecan - oder Steavinsäure - oder Stearate - enthaltenden Bindemittel-Mischungen für die Herstellung von Formkörper bekannt.

Bei der Herstellung von Dauermagneten nach dem Sinterverfahren ist es im Interesse guter mechanischer und magnetischer Eigenschaften erwünscht, Formkörper mit hoher Packungsdichte, gleichmäßiger Verteilung und zweckmäßiger Ausrichtung der Pulverteilchen zu erzeugen. Bei einem der bekannten Verfahren, dem Naßpressen, preßt man die magnetisierbaren Teilchen, die als in der Regel wässerige Dispersion eingesetzt werden, in einem Magnetfeld zu einem Grünkörper. Die Teilchen liegen dann in der anisotropen Orientierung vor, die für die spätere Magnetisierung der gesinterten Formkörper vorteilhaft ist. Nach dem Pressen werden die Teilchen zunächst wieder entmagnetisiert, weil magnetisierte Grünkörper ohne Plastifizier- und Bindemittel mechanisch außerordentlich empfindlich sind. Wegen dieser Empfindlichkeit muß das Entmagnetisieren der Grünkörper noch in der Form geschehen. Aber auch nach der Entmagnetisierung bleiben die Grünkörper mechanisch recht empfindlich, was insbesondere bei der Fertigung im industriellen Maßstab ihre Handhabung erschwert. Andererseits neigen gut gepreßte Grünkörper ohne Plastifizier- und Bindemittel beim Sintern in vergleichsweise geringem Maße zur Rißbildung.

Dagegen sind Grünkörper, die nach einem anderen bekannten Verfahren, nämlich unter Zusatz von organischen Plastifizier- und Bindemitteln durch Verformen unter magnetischer Orientierung, hergestellt werden, für die weitere Verarbeitung mechanisch hinreichend stabil und daher auch vor dem Sintern gut handhabbar. Sie werden in der Regel, wie die naßgepreßten Grünkörper, vor dem Sintern entmagnetisiert. Dies kann jedoch, anders als beim Naßpressen, wegen ihrer höheren mechanischen Stabilität außerhalb der Form geschehen, was einen zügigeren Arbeitsablauf ermöglicht. Andererseits müssen die organischen Plastifizier- und Bindemittel vor dem Sintern aus dem Grünkörper entfernt werden. Wenn dies nicht mit ausreichender Sorgfalt geschieht, zerfällt der Grünling infolge der auftretenden Gasentwicklung, und die Teilchen versintern später nicht. Das "Entbindern" ist ein kritischer Fertigungsschritt, der aus ökonomischen Gründen so kurz wie möglich gehalten werden sollte. Schließlich neigen die unter Verwendung von organischen Plastifizierund Bindemitteln hergestellten Grünkörper in höherem Maße zur Rißbildung beim Sintern als die naßgepreßten.

### Vorteile der Erfindung

Das Verfahren nach den Patentansprüchen 1 bis 6 vermeidet die geschilderten Nachteile des Standes der Technik. Es eignet sich besonders für die Herstellung von Magneten, insbesondere von Segmentmagneten, wie sie in Elektromotoren verwendet werden. Die Grünkörper können durch Spritzgießen, Extrudieren oder Pressen, zweckmäßig in einem orientierenden Magnetfeld, erzeugt werden. Das Extrudieren ermöglicht eine Endlosverarbeitung der Hartferrite. Dabei lassen sich beispielsweise Segmentmagnete mit einem Überdeckungswinkel von >140° ohne weiteres herstellen. Die Grünkörper, gleich nach welchem der genannten Verformungsverfahren hergestellt, sind für alle weiteren Fertigungsschritte mechanisch hinreichend stabil. Die erfindungsgemäßen Plastifizier- und Bindemittel lassen sich vor dem Sintern schneller und schonender aus den Grünkörpern entfernen als die Plastifizier- und Bindemittel nach dem Stand der Technik. Sie behindern nicht die Ausrichtung der Ferritteilchen im Magnetfeld bei der Herstellung der Grünkörper, und die einmal aufgeprägte Orientierung bleibt auch beim "Ausheizen" oder "Entbindern", d.h. der Entfernung des Binde- und Plastifiziermittels durch Erhitzen, erhalten. Die Grünkörper zeichnen sich durch hohe Formstabilität aus. Daher müssen die Formkörper nach dem Sintern in aller Regel nicht nachbearbeitet werden. Das gilt besonders für durch Pressen hergestellte Formkörper. Auch neigen die nach dem Verfahren der Erfindung hergestellten Formkörper in ähnlich geringem Maße zur Rißbildung wie durch Naßpressen hergestellte Formkörper. Nach dem Verfahren der Erfindung hergestellte Magnete zeigen gute magnetische Eigenschaften, die denen der durch Naßpressen ohne Plastifizierund Bindemittel erzeugten Magnete nicht nachstehen.

### Beschreibung der Erfindung

Das Verfahren nach der Erfindung eignet sich, wie gesagt, besonders für die Herstellung von Magneten, insbesondere von Segmentmagneten. Hierfür verwendbare Hartferrite sind zum Beispiel Bariumferrit (BaFe₂O₄) und insbesondere Strontiumferrit (SrFe₂O₄). Auch andere für die Herstellung von Magneten brauchbare Hartferrite können eingesetzt werden. Die Hartferrite werden im allgemeinen als Pulver mit mittleren Teilchengrößen im Bereich von 5 bis 20 µm verwendet. Die Pulver werden in üblicher Weise, beispielsweise durch Mahlen, z.B. in Schwing- oder Kugelmühlen, der durch Fällung aus wäßriger Lösung erhaltenen Mischoxide, hergestellt und sind im Handel erhältlich.

Die Verwendung von (a) Cyclododecan, Cyclododecanol und/oder Stearylalkohol zusammen mit (b) Stearinsäure als Plastifizier- und Bindemittel ist ein wesentliches Merkmal der vorliegenden Erfindung. Dabei dürfte die Stearinsäure als Dispergiermittel für die Hartferrite wirken. Die optimale Menge des Plastifizier- und Bindemittels hängt von dem Typ des eingesetzten Hartferrits sowie dessen mittlerer Teilchengröße ab und läßt sich durch orientierende Versuche unschwer feststellen. Im allgemeinen verwendet man 0,1 bis 30 Gewichtsprozent und vorteilhaft 1 bis 25 Gewichtsprozent Plastifiziermittel, bezogen auf das Gewicht des Hartferritpulvers. Bei Verwendung der erfindungsgemäßen Kombination aus den Komponenten (a) und (b) läßt sich die erforderliche Gesamtmenge an Plastifizier- und Bindemittel gegenüber einer gleich wirksamen Menge nur einer der Komponenten deutlich senken. Das ist eine der Ursachen dafür, daß, wie bereits gesagt, die Entfernung des Plastifizier- und Bindemittels nach der Erfindung aus dem Grünkörper vor dem Sintern besonders schnell und trotzdem schonend gelingt. Das Mengenverhältnis der beiden Komponenten (a) und (b) kann in weiten Grenzen schwanken. Im allgemeinen arbeitet man mit Gewichtsverhältnissen von 95:5 bis 5:95, zweckmäßig mit einem Gewichtsverhältnis von etwa 65:35. Wenn man als Komponente (b) ein Gemisch aus zwei der genannten Stoffe oder aus allen drei Stoffen einsetzt, so können diese Stoffe in beliebigen Mischungsverhältnissen vorliegen, auch in solchen, in denen die Stoffe keine einphasigen Mischungen bilden.

Vor der Herstellung der Grünkörper werden das Hartferritpulver und die Komponenten des Plastifizier- und Bindemittels innig gemischt. Das kann in beliebiger Reihenfolge geschehen, beispielsweise indem man alle drei Stoffe gleichzeitig mischt oder aber einem der drei Stoffe nacheinander die beiden anderen Stoffe zufügt. Für den Mischvorgang eignen sich die üblichen Vorrichtungen, die eine hinreichende Scherwirkung auf die zu mischenden Stoffe ausüben, beispielsweise ein Trogkneter, SIGMA-Kneter usw. Erhöhte Temperaturen, beispielsweise von 50 bis 150°C, fördern die Durchmischung.

Die erhaltene Mischung wird dann durch Spritzgießen, Extrudieren (Strangpressen) oder vorteilhaft durch Pressen zu Grünkörpern verformt. Das geschieht zweckmäßig in einem orientierenden Magnetfeld mit einer Feldstärke von >600 kA/m. Die Entfernung des Plastifizier- und Bindemittels aus den Grünkörpern erfolgt bei Temperaturen, die zweckmäßig bis zu etwa 650°C betragen, und in einer sauerstoffhaltigen Atmosphäre, vorteilhaft in Luft. Die optimale Temperatursteigerungsrate und die Dauer des Erhitzens hängen u.a. von der Schichtdicke der Formkörper ab und lassen sich wiederum durch orientierende Versuche unschwer ermitteln. Man beginnt bei Raumtemperatur und steigert die Temperatur im allgemeinen um 1 bis 100 K/min. Das Plastifizier- und Bindemittel ist in der Regel nach 10 bis 120 Stunden so weitgehend entfernt, daß die Grünkörper gesintert werden können.

Die entbinderten Grünkörper können in an sich bekannter Weise gesintert werden. Zweckmäßig werden das Entbindern und das Sintern zu einem Arbeitsgang in demselben Ofen zusammengezogen, beispielsweise indem die Grünkörper in einer sauerstoffhaltigen Atmosphäre, wie Luft, allmählich auf 1200 bis 1350°C erhitzt und 10 bis 30 min auf dieser Temperatur gehalten werden. Dabei wird die Temperatur im Bereich von 20°C bis etwa 600°C zweckmäßig mit einer Steigerungsrate von 20 bis 40 k/min und und im Bereich von etwa 600°C bis zur Spitzentemperatur zweckmäßig mit einer Steigerungsrate von 200 bis 400 K erhöht.

### Beispiel

850 g eines handelsüblichen Strontiumferrits, 100g Cyclododecan und 50g Stearinsäure werden 1 Stunde bei 70°C in einem Kneter gemischt, das Gemisch wird nach Abkühlen granuliert und in einer Schneidmühle zerkleinert. Das zerkleinerte Gut wird bei 80°C zu 5 mm starken Magnetsegmenten gepreßt. In nur einem Fertigungsschritt wird das Plastifizier- und Bindemittel entfernt und werden die entbinderten Grünkörper gesintert. Dazu werden die Grünkörper in einem luftgespülten Elektroofen mit einer Temperatursteigerungrate von 30 K/h von 20°C auf 600°C und mit einer Temperatursteigerungsrate von 300 K/h auf 1.250°C erhitzt und 15 min auf dieser Temperatur gehalten.

Nach dem Abkühlen waren die Sinterkörper rißfrei und zeigten die folgenden magnetischen Eigenschaften:

| | |
|---|---|
| Remanenz | Br 380mT |
| Koerzitivfeldstärke | 350 kA/m |

Entsprechende Ergebnisse werden erhalten, wenn man das Gemisch aus Strontiumferrit-Pulver und Plastifizier- und Bindemittel durch Strangpressen formt.

## Patentansprüche

1. Verfahren zur Herstellung von Formkörpern aus Hartferriten, bei dem man feinteilige Hartferritpulver nach Zusatz eines Plastifizier- und Bindemittels zu einem Grünkörper verformt, das Plastifizier- und Bindemittel durch Erhitzen aus dem Grünkörper entfernt und danach den Grünkörper auf Sintertemperaturen erhitzt, dadurch gekennzeichnet, daß man als Plastifizier- und Bindemittel (a) Cyclododecan, Cyclododecanol, Stearylalkohol oder Gemische von zwei oder all diesen Stoffen zusammen mit (b) Stearinsäure verwendet.

2. Verfahren nach Anspruch 1, dadurch gekennzeichnet, daß die Formkörper isotrope oder anisotrope Magnete sind.

3. Verfahren nach Anspruch 1 oder 2, dadurch gekennzeichnet, daß die Formkörper isotrope oder anisotrope Segmentmagnete sind.

4. Verfahren nach jedem der Ansprüche 1 bis 3, dadurch gekennzeichnet, daß die feinteiligen Hartferritpulver nach Zusatz eines Plastifizier- und Bindemittels durch Spritzgießen, Extrudieren oder Pressen in einem Magnetfeld zu einem Grünkörper verformt werden.

5. Verfahren nach jedem der Ansprüche 1 bis 4, dadurch gekennzeichnet, daß das Plastifizier- und Bindemittel in Mengen von 0,1 bis 30 Gewichtsprozent, bezogen auf das feinteilige Hartferritpulver, zugesetzt wird.

6. Verfahren nach jedem der Ansprüche 1 bis 5, dadurch gekennzeichnet, daß als Plastifizier- und Bindemittel (a) 0,1 bis 20 Gewichtsprozent Cyclododecan, Cyclododecanol, Stearylalkohol oder ein Gemisch von zwei oder all diesen Stoffen zusammen mit (b) 0,1 bis 15 Gewichtsprozent Stearinsäure, jeweils bezogen auf das feinteilige Hartferritpulver verwendet wird.

## Claims

1. Process for the production of shaped articles from hard ferrites, in which finely divided hard ferrite powder is formed into a green body after the addition of a plasticizer and binder, the plasticizer and binder are removed from the green body by heating, and the green body is then heated to sintering temperatures, characterized in that (a) cyclododecane, cyclododecanol, stearyl alcohol or mixtures of two or all of these materials together with (b) stearic acid are used as plasticizer and binder.

2. Process according to Claim 1, characterized in that the shaped articles are isotropic or anisotropic magnets.

3. Process according to Claim 1 or 2, characterized in that the shaped articles are isotropic or anisotropic segmented magnets.

4. Process according to each of Claims 1 to 3, characterized in that the finely divided hard ferrite powder is formed into a green body by injection moulding, extruding or compression in a magnetic field after the addition of a plasticizer and binder.

5. Process according to each of Claims 1 to 4, characterized in that the plasticizer and binder are added in quantities of from 0.1 to 30 per cent by weight, relative to the finely divided hard ferrite powder.

6. Process according to each of Claims 1 to 5, characterized in that (a) from 0.1 to 20 per cent by weight of cyclododecane, cyclododecanol, stearyl alcohol or a mixture of two or all of these materials together with (b) from 0.1 to 15 per cent by weight of stearic acid, in each case relative to the finely divided hard ferrite powder, is used as the plasticizer and binder.

## Revendications

1. Procédé de fabrication de corps formés en ferrites dures, dans lequel on forme une poudre de ferrite dure en fines particules après addition d'un plastifiant et d'un liant pour donner un corps cru, on retire le plastifiant et le liant du corps cru par chauffage, puis on chauffe le corps cru à des températures de frittage,
caractérisé en ce qu'
on utilise comme plastifiant et comme liant (a) le cyclododécane, le cyclododécanol, l'alcool stéarylique ou des mélanges de deux ou de la totalité de ces matériaux, avec (b) de l'acide stéarique.

2. Procédé selon la revendication 1,
caractérisé en ce que
les corps formés sont des aimants isotropes ou anisotropes.

3. Procédé selon la revendication 1 ou 2,
caractérisé en ce que
les corps formés sont des aimants segmentaires isotropes ou anisotropes.

4. Procédé selon les revendications 1 à 3,
caractérisé en ce qu'
on forme la poudre de ferrite dure en particules fines après addition d'un plastifiant et d'un liant par moulage sous pression, extrusion ou pressage dans un champ magnétique pour donner un corps cru.

5. Procédé selon les revendications 1 à 4,
caractérisé en ce qu'
on ajoute le plastifiant et le liant à des quantités de 0,1 à 30 % en poids, par rapport à la poudre de ferrite en particules dures.

6. Procédé selon les revendications 1 à 5,
caractérisé en ce qu'
on utilise comme plastifiant et comme liant (a) de 0,1 à 20 % en poids de cyclododécane, de cyclododécanol, d'alcool stéarylique, ou d'un mélange de deux ou de la totalité de ces matériaux avec (b) de 0,1 à 15 % en poids d'acide stéarique, toujours par rapport à la poudre de ferrite dure en particules fines.
